# EUROPÄISCHE PATENTANMELDUNG

(11) **EP 4 421 540 A1**
(43) Veröffentlichungstag der Anmeldung: **28.08.2024**
(21) Anmeldenummer: 23158137.2
(22) Anmeldetag: 23.02.2023
(51) Int. Cl.: G01V 8/20, G01V 8/22

(54) **LICHTVORHANG UND VERFAHREN ZUM BETRIEB EINES LICHTVORHANGS**

(71) Anmelder: Leuze electronic GmbH + Co. KG, 73277 Owen/Teck (DE)
(72) Erfinder: Olbrich, Sebastian, 80992 München (DE); Feller, Bernhard, 86316 Friedberg (DE); Heckmayr, Alexander, 86807 Buchloe (DE)
(74) Vertreter: Ruckh, Rainer Gerhard

(57) **Zusammenfassung**

Die Erfindung betrifft einen Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (61 - 68) und mit einer Auswerteeinheit (8), in welcher in Abhängigkeit von Empfangssignalen der Empfänger (61 - 68) ein Objektfeststellungssignal generiert wird. Die Empfänger (61 - 68) sind in Gruppen unterteilt. Steuermittel sind vorhanden, mittels derer die Empfänger (61 - 68) jeder Gruppe in einem Multiplexbetrieb einzeln nacheinander während Aktivierungszeitintervallen aktiviert werden. Die Aktivierung der Empfänger (61 - 68) unterschiedlicher Gruppen erfolgt mit einem an ein Aktivierungszeitintervall angepassten Zeitversatz.

## Beschreibung

Die Erfindung betrifft einen Lichtvorhang und ein Verfahren zum Betrieb eines Lichtvorhangs.

Ein derartiger Lichtvorhang ist beispielsweise aus der DE 10 2008 050 943 A1 vorbekannt. Der Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Der Betrieb des Lichtvorhangs erfolgt derart, dass die Strahlachsen, d.h. die Sender und Empfänger der einzelnen Strahlachsen, zyklisch einzeln nacheinander aktiviert werden. Bei dem in der DE 10 2008 050 943 A1 beschriebenen Lichtvorhang werden die einzelnen Sender über Schieberegister einzeln aktiviert. Ebenso werden die Empfänger über Schieberegister einzeln aktiviert. Die Synchronisierung der Sender- und Empfängeraktivierung erfolgt auf optischem Weg. Hierzu werden die Lichtstrahlen einer ausgewählten Strahlachse verwendet.

Zur Erhöhung der Nachweisempfindlichkeit des Lichtvorhangs werden die Empfangssignale verstärkt, bevor sie der Auswerteeinheit zugeführt werden.

Dabei ist es bekannt, einen oder mehrere Verstärker in einem Multiplexbetrieb derart zu betreiben, dass nacheinander mehrere Empfänger dem jeweiligen Verstärker zugeschaltet werden, so dass dessen Empfangssignale im Verstärker verstärkt werden.

Der Vorteil hierbei besteht darin, dass nicht für jeden Empfänger ein separater Verstärker vorgesehen werden muss, so dass nur wenig Bauteile empfangsseitig vorgesehen werden müssen.

Ein Nachteil bei derartigen Anordnungen besteht darin, dass die mit einem Multiplexer durchgeführte Umschaltvorgänge, mit denen jeweils ein anderer Empfänger dem Verstärker zugeschaltet wird, zu Einschwingvorgängen in den verstärkten Empfangssignalen führen können, d.h. die verstärkten Empfangssignale sind verfälscht. Daher ist nach jedem Umschaltvorgang eine Wartezeit erforderlich, bis die Einschwingvorgänge abgeklungen sind. Dies führt jedoch zu einer unerwünschten Erhöhung der Reaktionszeit des Lichtvorhangs bei der Objekterfassung.

Der Erfindung liegt die Aufgabe zugrunde, einen Lichtvorhang der eingangs genannten Art bereitzustellen, der einen konstruktiv einfachen Aufbau aufweist und mit welchem bei kurzen Reaktionszeiten eine sichere Objektdetektion durchführbar ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen Lichtvorhang zur Erfassung von Objekten in einem Überwachungsbereich, mit einer Anordnung von Lichtstrahlen emittierenden Sendern, mit einer Anordnung von Lichtstrahlen empfangenden Empfängern und mit einer Auswerteeinheit, in welcher in Abhängigkeit von Empfangssignalen der Empfänger, ein Objektfeststellungssignal generiert wird. Die Empfänger sind in Gruppen unterteilt. Steuermittel sind vorhanden, mittels derer die Empfänger jeder Gruppe in einem Multiplexbetrieb einzeln nacheinander während Aktivierungszeitintervallen aktiviert werden. Die Aktivierung der Empfänger unterschiedlicher Gruppen erfolgt mit einem an ein Aktivierungszeitintervall angepassten Zeitversatz.

Die Erfindung betrifft weiterhin ein entsprechendes Verfahren.

Der erfindungsgemäße Lichtvorhang weist eine Anordnung von Sendern auf, die vorteilhaft in einer Sendereinheit integriert sind. Weiterhin weist der Lichtvorhang vorteilhaft eine Empfängereinheit auf, in der eine Anordnung von Empfängern angeordnet sind. Die Sendereinheit und die Empfängereinheit sind an gegenüberliegenden Rändern des Überwachungsbereichs angeordnet. Jedem Sender ist vorteilhaft ein Empfänger zur Ausbildung einer Strahlachse so zugeordnet, dass bei freiem Überwachungsbereich die Lichtstrahlen eines Senders ungehindert zu dem zugeordneten Empfänger der jeweiligen Strahlachse geführt sind. Objekte im Überwachungsbereich werden dadurch erkannt, dass zumindest die Lichtstrahlen einer Strahlachse unterbrochen werden.

Prinzipiell kann der Lichtvorhang auch als Reflexions-Lichtvorhang ausgebildet sein. Dann sind die Sender und Empfänger in einer gemeinsamen Sender-/Empfängereinheit untergebracht, die an einem Rand des Überwachungsbereichs angeordnet ist. Am anderen Rand des Überwachungsbereichs befindet sich ein Reflektor als weiterer Bestandteil des Lichtvorhangs. Bei freiem Überwachungsbereich werden die Lichtstrahlen jedes Senders zum Reflektor geführt und von dort zurück zum zugeordneten Empfänger reflektiert.

Erfindungsgemäß sind bei dem Lichtvorhang dessen Empfänger in Gruppen unterteilt. Durch Steuermittel werden die Empfänger jeder Gruppe in einem Multiplexbetrieb einzeln nacheinander während Aktivierungszeitintervallen aktiviert, wobei vorteilhaft die Aktivierungszeitintervalle für alle Empfänger gleich sind. Dabei werden die Empfänger unterschiedlicher Gruppen mit einem Zeitversatz aktiviert, wobei dieser Zeitversatz an die Aktivierungszeitintervalle angepasst ist. Der Zeitversatz für die Gruppen ist dabei immer kleiner als das Aktivierungszeitintervall. Dadurch sind die Aktivierungszeitintervalle der Empfänger der einen Gruppe zeitlich immer um einen Zeitversatz kleiner als das Aktivierungszeitintervall versetzt zu den Aktivierungszeitintervallen der anderen Gruppe, d.h. die Aktivierungszeitintervalle der Empfänger der beiden Gruppen sind ineinander geschachtelt, d.h. teilweise überlappend.

Gemäß einer vorteilhaften Variante werden einzelne Empfänger einer Gruppe wechselweise mit einem Empfänger einer anderen Gruppe nach einem Aktivierungszeitintervall zeitversetzt aktiviert.

Ein wesentlicher Vorteil gegenüber Lichtvorhängen bei denen alle Empfänger zeitlich hintereinander aktiviert werden, besteht darin, dass eine kürzere Reaktionszeit bei der Generierung des Objektfeststellungssignals erhalten wird.

Besonders vorteilhaft wird hierbei berücksichtigt, dass am Anfang jeder Aktivierungszeitintervall eine durch Umschaltvorgänge des Multiplexbetriebs bedingte Umschaltstörung vorhanden ist, die mit einer Einschwingzeit abklingt. Um zu verhindern, dass diese Umschaltstörungen die von den Sendern empfangene Nutzsignale überlagern, wird der Sendebetrieb so gesteuert, dass die Nutzsignale in einem Aktivierungszeitintervall erst nach Abklingen der Einschwingzeit im Empfangssignal jedes Empfängers vorhanden sind.

Gemäß einer besonders vorteilhaften Ausgestaltung der Erfindung ist der Zeitversatz der Aktivierung der Empfänger-Gruppen an die Einschwingzeit der Umschaltstörung angepasst, d.h. der Zeitversatz entspricht im Wesentlichen der Einschwingzeit. Der Vorteil, der damit erzielt wird, besteht darin, dass durch den an die Einschwingzeit angepassten Zeitversatz eine Ausblendung der Umschaltstörung im Empfangssignalverlauf der Empfänger bewirkt ist.

Diese Ausblendung erfolgt im Wesentlichen derart, dass nicht mehr das Empfangssignal im kompletten Aktivierungszeitintervall zur weiteren Auswertung herangezogen wird, sondern nur der auf die Einschwingzeit folgende Teil des Aktivierungszeitintervalls. Da der Zeitversatz der Empfänger-Gruppen dieser Einschwingzeit entspricht, ergibt sich somit als Überlagerung der zur Auswertung herangezogenen Empfangssignale in den einzelnen um die Einschwingzeit verkürzten Teil-Aktivierungszeitintervallen eine resultierende Empfangssignalfolge in denen die Umschaltstörungen ausgeblendet sind.

Damit wird nicht nur eine verkürzte Reaktionszeit bei der Generierung des Objektfeststellungssignals erhalten, vielmehr sind Störeinflüsse durch Umschaltstörungen eliminiert.

Eine hierfür besonders geeignete geometrische Empfängeranordnung ist dadurch gegeben, dass die Empfänger eine Reihenanordnung bilden, wobei benachbarte Empfänger unterschiedlichen Gruppen angehören.

Besonders vorteilhaft sind zwei Gruppen von Empfängern vorhanden, wobei geradzahlige Empfänger in der Reihenanordnung einer ersten Gruppe und ungeradzahlige Empfänger in der Reihenanordnung einer zweiten Gruppe angehören.

Gemäß einer vorteilhaften Ausführungsform ist jeder Gruppe von Empfängern ein Verstärker zugordnet, in welchem die Empfangssignale der Empfänger dieser Gruppe verstärkt werden.

Da die Empfänger jeder Gruppe im Multiplexbetrieb betrieben werden, können diese einzeln nacheinander dem Verstärker dieser Gruppe zugeschaltet werden. Dies stellt gegenüber einer Anordnung, bei der jedem Empfänger ein Verstärker zugeordnet ist, eine erhebliche konstruktive Vereinfachung dar.

Gemäß einer vorteilhaften Ausgestaltung umfassen die Steuermittel einer Steuerung und eine Adressiereinheit, mittels derer eine Adressierung der Empfänger durchgeführt wird.

Mit der Adressiereinheit können zudem auch die Verstärker der einzelnen Gruppen adressiert werden.

Die Steuerung ist vorteilhaft Bestandteil der Auswerteeinheit zur Auswertung der Empfangssignale. Hierzu werden die Empfangssignale aller Empfänger der Steuerung zugeführt.

Vorteilhaft weist die Adressiereinheit eine Schiebekette auf.

Die Schiebekette weist eine Reihenanordnung von Schieberegisterelementen auf, wobei jedem Empfänger und ggf. Verstärker ein Schieberegisterelement zugeordnet ist. Der Empfänger oder Verstärker wird dadurch adressiert, dass dieses Schieberegisterelement der Bitwert 1 aufweist. Alle anderen Schieberegisterelemente weisen den Bitwert 0 auf. Zur Einzel-Adressierung aller Empfänger bzw. Verstärker wird der Bitwert 1 sukzessive durch alle Schieberegisterelemente der Schiebekette geschoben.

Natürlich kann die Adressierung auch mit entgegengesetzten Bitwerten erfolgen, d.h. der Empfänger oder Verstärker wird dadurch adressiert, dass dieses Schieberegisterelement der Bitwert 0 auf. Zur Einzel-Adressierung aller Empfänger bzw. Verstärker wird der Bitwert 0 skzesive durch alle Schieberegisterelemente der Schiebekette geschoben.

Vorteilhaft ist zur Auswahl einer Gruppe von Empfängern eine Gruppen-Schiebekette vorhanden.

Besonders zweckmäßig ist die Gruppen-Schiebekette Bestandteil der Schiebekette.

Zur Durchführung des Multiplexbetrieb ist vorteilhaft jeder Gruppe von Empfängern ein Multiplexer zugeordnet.

Die Multiplexer können aus Halbleiterschaltelementen wie z.B. Halbleiter-Dioden, Diodenstrecken von Transistoren wie gesteuerten Halbleiter-Transistoren wie FET oder von Flip Flops gebildet sein.

Analog können die Multiplexer aus Analogschaltern insbesondere in Form mehrerer integrierter Analogschalter aufgebaut sein.

Dabei können Gruppen mit Komplett- oder Teilbestückungen vorhanden sein.

Bei einer Komplettbestückung ist die maximale Anzahl von Empfängern vorhanden. Bei einer Teilbestückung sind weniger Empfänger vorhanden, die dadurch in größeren Abständen zueinander angeordnet sind, wodurch die Auflösung des Lichtvorhang reduziert ist.

Vorteilhaft sind die Gruppen von Empfängern zu einem Gesamtsystem zusammengeschaltet.

Dies bedeutet, dass sich die Gruppen der Empfänger in einer Gesamt-Empfängeranordnung ergänzen.

Insbesondere ist hierzu ein Umschalter vorhanden, mittels dessen eine Umschaltung von Ausgangssignalen der Gruppen der Empfänger erfolgt.

Dabei ist der Ausgang des Umschalters auf die Steuerung geführt.

Gemäß einer vorteilhaften Ausgestaltung sind eine oder mehrere Gruppen von Empfängern auf einer Leiterplatte zusammengefasst und bilden eine Kaskade.

Die Kaskaden bilden separate Hardwareeinheiten.

Typischerweise liegen die Empfangssignale in Form von Strom- oder Spannungssignalen vor.

Um eine erhöhte EMV-Störfestigkeit zu erhalten, werden Strom- bzw. Spannungssignale in Form von Differenzsignalen ausgewertet.

Gemäß einer vorteilhaften Ausgestaltung ist der Lichtvorhang ein Sicherheitssensor. Der Lichtvorhang weist dann einen fehlersicheren Aufbau auf und kann so in sicherheitstechnischen Applikationen eingesetzt werden. Der fehlersichere Aufbau kann insbesondere durch eine mehrkanalige Auswerteeinheit realisiert werden.

Die Erfindung wird im Folgenden anhand der Zeichnungen erläutert. Es zeigen:
- Figur 1:: Schematische Darstellung eines Ausführungsbeispiels des erfindungsgemäßen Lichtvorhangs.
- Figur 2:: Erstes Beispiel einer empfangsseitigen Schaltungsanordnung für den Lichtvorhang gemäß Figur 1.
- Figur 3:: Zweites Beispiel einer empfangsseitigen Schaltungsanordnung für den Lichtvorhang gemäß Figur 1.
- Figur 4:: Variante der Schaltungsanordnung gemäß Figur 3.
- Figur 5:: Erstes Beispiel einer Schaltungsanordnung zur Ansteuerung mehrerer Gruppen von Empfängern des Lichtvorhangs gemäß Figur 1.
- Figur 6:: Zweites Beispiel einer Schaltungsanordnung zur Ansteuerung mehrerer Gruppen von Empfängern des Lichtvorhangs gemäß Figur 1.
- Figur 7:: Variante der Schaltungsanordnung gemäß Figur 6.
- Figur 8:: Erweiterung der Ausführungsform gemäß Figur 7.
- Figur 9:: Schaltungsanordnung mit Multiplexern für den Lichtvorhang gemäß Figur 1.
- Figur 10:: Zeitdiagramm für verstärkte Empfangssignale einer Reihenanordnung von Empfängern eines Lichtvorhangs.
- Figur 11:: Zeitdiagramme für verstärkte Empfangssignale für die Empfängeranordnungen der Figuren 2 und 3.

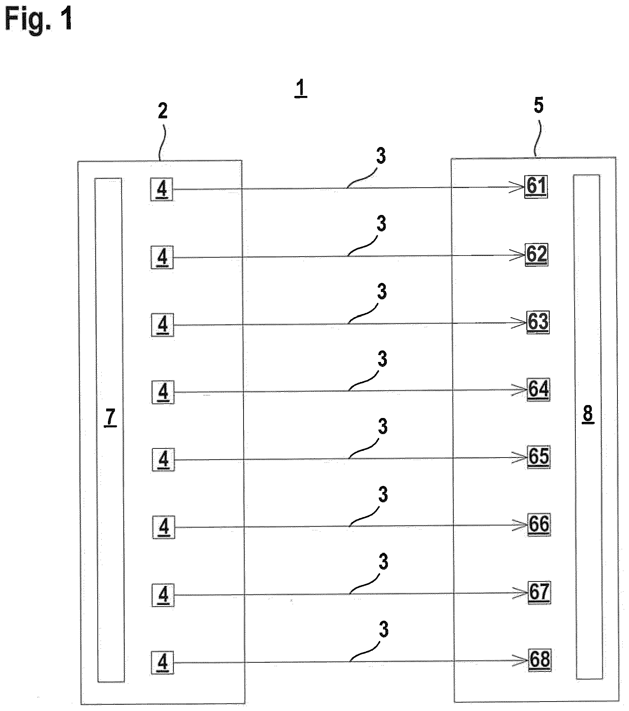

Figur 1 zeigt den prinzipiellen Aufbau des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 beispielsweise in Form von Sendedioden angeordnet ist. Der Lichtvorhang 1 weist weiterhin eine Empfängereinheit 5 auf, in deren Gehäuse eine Reihenanordnung von Lichtstrahlen 3 empfangenden Empfängern 61 - 68. Die Empfänger 61 - 68 können von Foto-PIN-Dioden oder Foto-Dioden gebildet sein. Alternativ können auch Foto-Transistoren eingesetzt werden.

Die Sendereinheit 2 und die Empfängereinheit 5 sind an gegenüberliegenden Rändern eines Überwachungsbereichs angeordnet. Bei freiem Überwachungsbereich treffen die von jeweils einem Sender 4 emittierten Lichtstrahlen 3 auf einen zugeordneten, gegenüberliegenden Empfänger 61 - 68. Ein Sender 4 und der hierzu zugeordnete Empfänger 61 - 68 bilden jeweils eine Strahlachse. Der Senderbetrieb wird durch eine Steuereinheit 7 in der Sendereinheit 2 gesteuert und bewertet. Der Empfängerbetrieb wird durch eine Auswerteeinheit 8 in der Empfängereinheit 5 gesteuert. Die Sender 4 und Empfänger 61 - 68 der einzelnen Strahlachsen werden durch eine optische Synchronisierung des Lichtvorhangs 1 zyklisch einzeln oder zu mehreren nacheinander aktiviert. Mit den parallel verlaufenden Lichtstrahlen 3 der Strahlachsen wird ein in einer Ebene verlaufendes Schutzfeld überwacht.

In der Auswerteeinheit 8 werden hierzu die Empfangssignale der Empfangsdioden ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit 8 einen mehrkanaligen, redundanten Aufbau auf, beispielsweise in Form zweier sich zyklisch überwachender Rechnereinheiten.

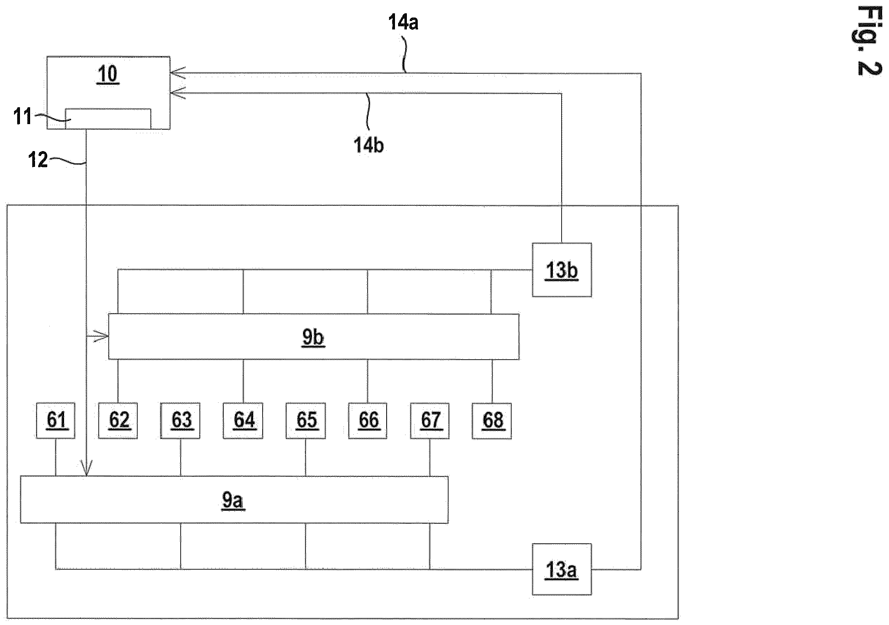

Figur 2 zeigt ein Ausführungsbeispiel einer empfangsseitigen Schaltungsanordnung für den Lichtvorhang 1 gemäß Figur 1.

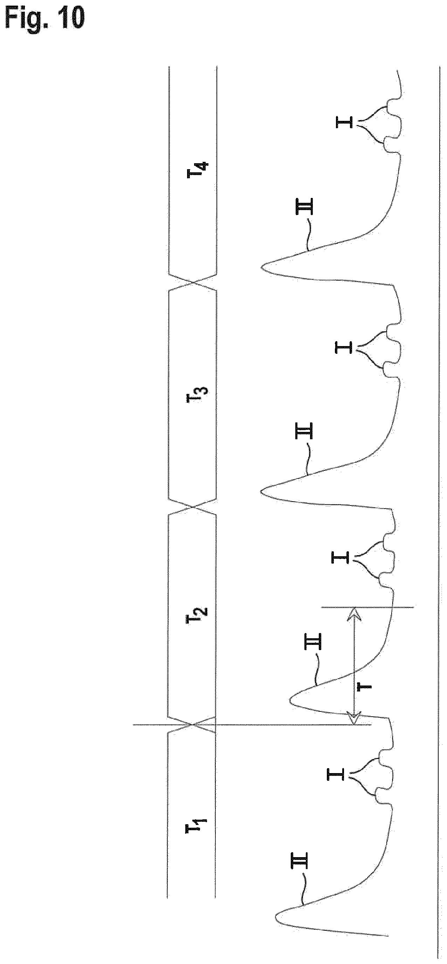

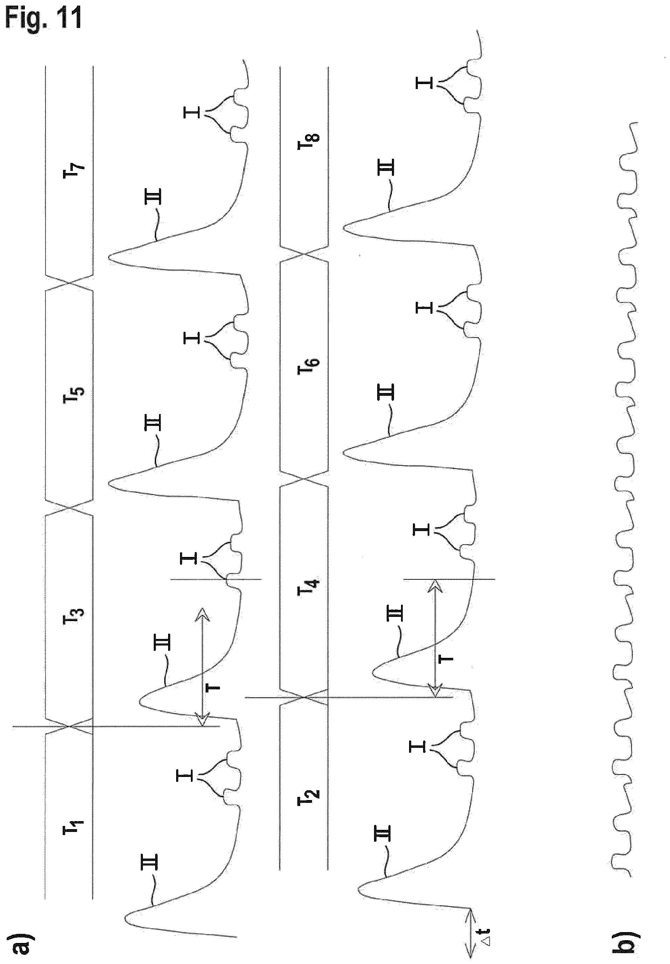

Erfindungsgemäß sind die Empfänger 61 - 68 in mehrere Gruppen aufgeteilt, wobei die Empfänger 61 - 68 jeder Gruppe einzeln nacheinander in einem Multiplexbetrieb für bestimmte Aktivierungszeitintervalle Ti (wie in den Figuren 10, 11 dargestellt) aktiviert werden. In den nachfolgenden Ausführungsbeispielen sind die Aktivierungszeitintervalle Ti aller Empfänger 61 - 68 identisch, was jedoch nicht zwingend ist.

Erfindungsgemäß erfolgt die Aktivierung der Empfänger 61 - 68 unterschiedlicher Gruppen mit einem Zeitversatz, dessen Größe an die Größe des Aktivierungszeitintervalls Ti angepasst ist. Vorteilhaft ist der Zeitversatz zweier Gruppen immer kleiner als ein Aktivierungszeitintervall Ti.

Bei der Ausführungsform gemäß Figur 2 sind zwei Gruppen von Empfängern 61 - 68 vorhanden. Bei der in einer Reihe angeordneten Empfängern 61 - 68 (Figur 1) sind die ungeradzahligen Empfänger 61, 63, 65, 67 einem ersten Multiplexer 9a zugeordnet um diese in einem Multiplexbetrieb zu betrieben. Entsprechend sind die geradzahligen Empfänger 62, 64, 66, 68 einem weiteren Multiplexer 9b zugeordnet, der diese in einem Multiplexbetrieb betreibt.

Die Schaltungsanordnung weist eine Steuerung 10 auf, die im vorliegenden Fall Bestandteil der Auswerteeinheit 8 ist. Die Steuerung 10 steuert eine Adressiereinheit 11, die Steuersignale 12, ausgibt. Durch die Adressierung werden die Empfänger 61 - 68 zeitlich nacheinander aktiviert.

Die Empfangssignale der ersten Gruppe von Empfängern 61, 63, 65, 67 werden mit einem ersten Verstärker 13a verstärkt. Die so verstärkten Empfangssignale werden der Steuerung 10 über eine Leitung 14a der Steuerung 10 zugeführt. Entsprechend werden die Empfangssignale der Empfänger 62, 64, 66, 68 mit einem zweiten Verstärker 13b verstärkt, dessen Ausgangssignale werden über eine Leitung 14b der Steuerung 10 zugeführt.

Über die Leitungen 14a, 14b werden somit die Empfangssignale aller Empfänger 61 - 68 der Steuerung 10 zugeführt, so dass daraus das Objektfeststellungssignal generiert werden kann.

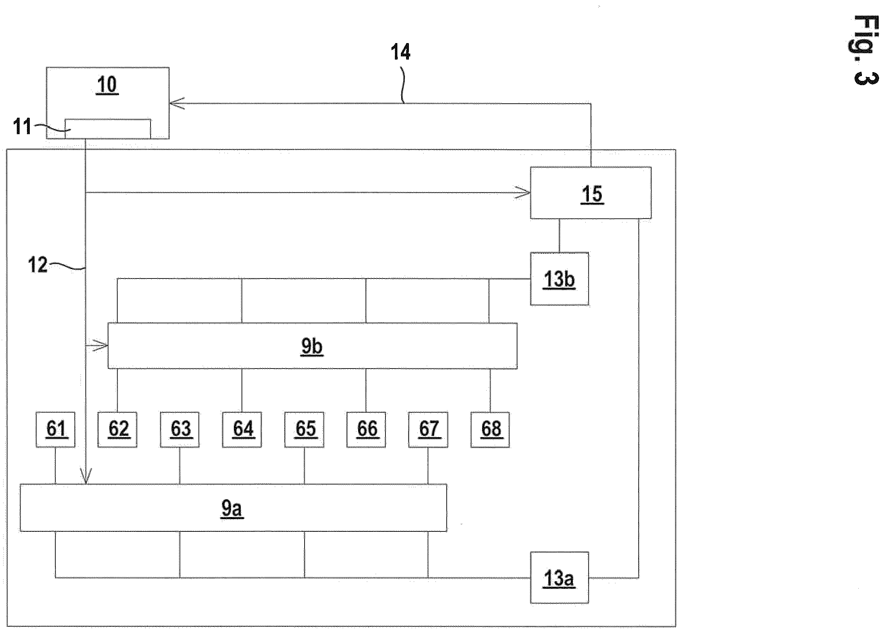

Figur 3 zeigt eine Variante der Ausführungsform gemäß Figur 2. Die Ausführungsform gemäß Figur 3 unterscheidet sich von der Ausführungsform gemäß Figur 2 nur dadurch, dass die Ausgangssignale der Verstärker 13a, 13b auf einem Umschalter 15 geführt sind. Durch Umschaltvorgänge des Umschalters 15 werden die Empfangssignale der Empfänger 61, 63, 65, 67 der ersten Gruppe und die Empfangssignale der Empfänger 62, 64, 66, 68 der zweiten Gruppe zeitversetzt der Steuerung 10 zugeführt.

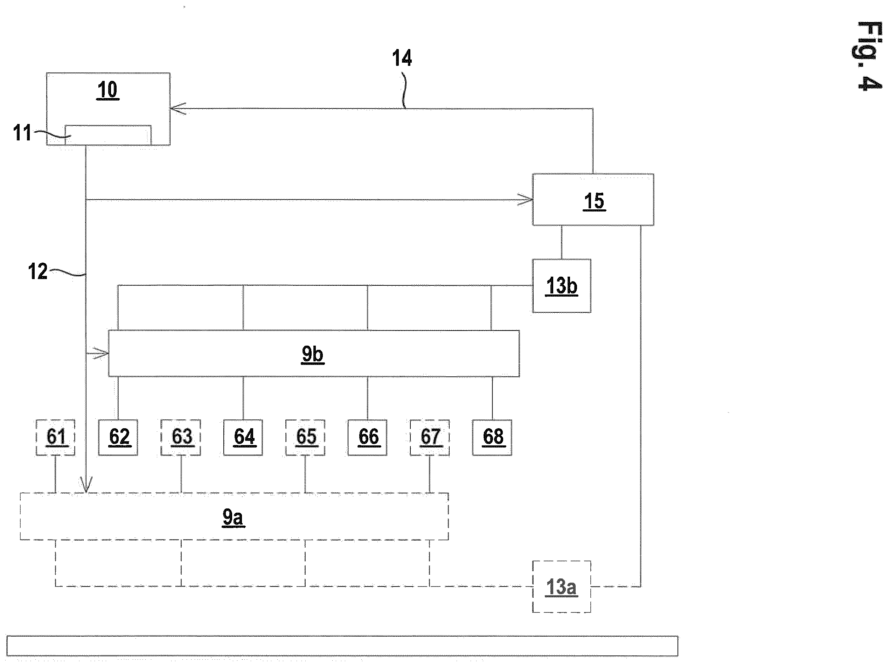

Figur 4 zeigt eine Variante der Ausführungsform gemäß Figur 3 mit einer Teilbestückung von Bauteilen. Die in Figur 4 gestrichelt dargestellten Bauteile sind bei dieser Teilbestückung nicht vorhanden. Da in diesem Fall nur die Empfänger 62, 64, 66, 68 vorhanden sind, ergibt sich eine geringere Auflösung als bei der Variante mit Komplettbestückung (Figur 3).

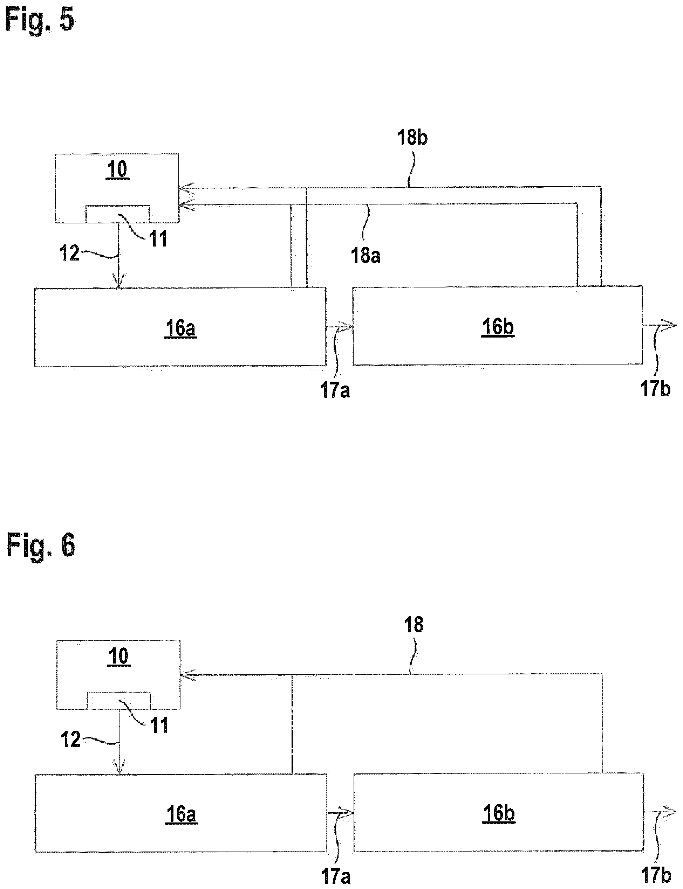

Figur 5 zeigt schematisch eine Ansteuerung von Empfänger-Gruppen 16a, 16b mit jeweils mehreren Empfängern 61 - 68 und einem Verstärker 13a, 13b, die von der Steuerung 10 gesteuert werden. Die Empfänger-Gruppen 16a, 16b können über Signalverkettungen 17a, 17b oder mehrere Busleitungen 18a, 18b verbunden sein.

Figur 6 zeigt eine der Figur 5 weitgehend entsprechende Anordnung, wobei in diesem Fall nur eine Busleitung 18 vorhanden ist.

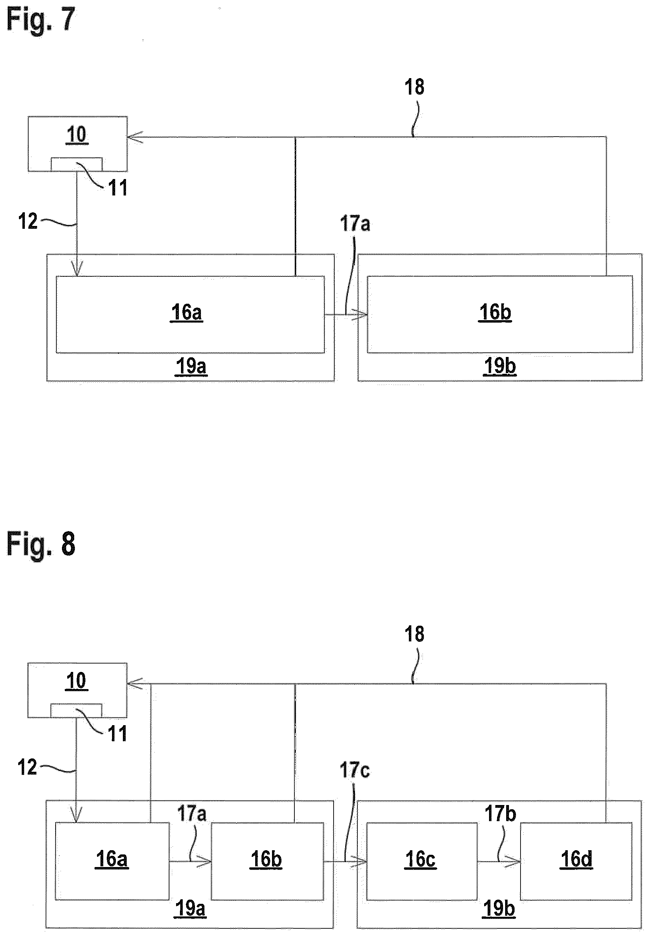

Figur 7 zeigt eine Variante der Ausführungsform gemäß Figur 6. In diesem Fall ist jede Empfänger-Gruppe 16a, 16b auf einer separaten Leiterplatte 19a, 19b angeordnet und bildet so eine Kaskade.

Figur 8 zeigt eine Erweiterung der Ausführungsform gemäß Figur 7. In diesem Fall sind auf jeder Leitungsplatte 19a, 19b zwei Empfänger-Gruppen 16a, 16b bzw. 16c, 16d vorhanden, die über Signalverkettungen 17a - 17c verbunden sind.

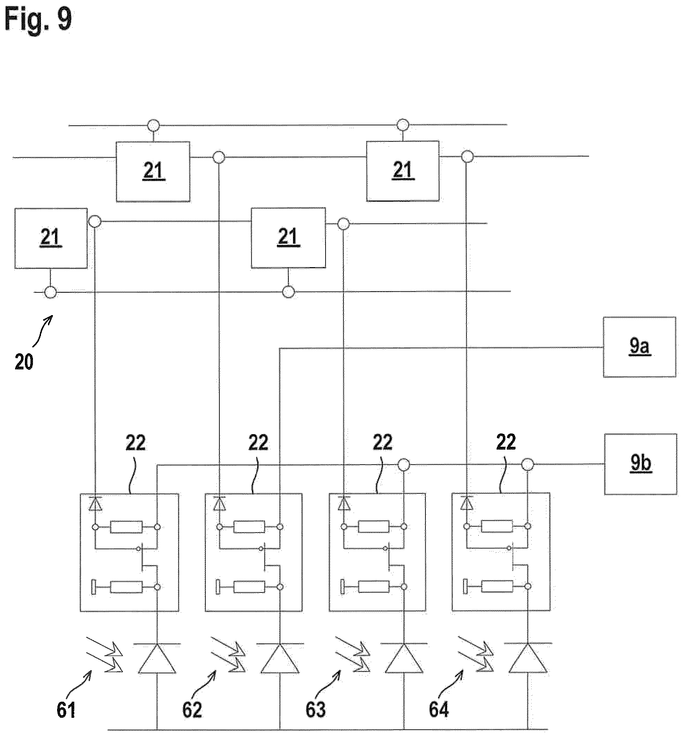

Figur 9 zeigt eine empfangsseitige Schaltungsanordnung mit Analogschaltern 22 als Multiplexern 9a, 9b zum Schalten auf Verstärker 13a, 13b, die Gruppen von Empfängern 61, 62, 63, 64 zugeordnet sind, damit diese im Multiplexbetrieb betrieben werden.

Die Adressierung der Empfänger 6 und Verstärker 13a, 13b erfolgt über Schieberegisterelemente 21 einer Schiebekette 20, die die Adressiereinheit 11 bildet.

Figur 10 zeigt ein Zeitdiagramm für verstärkte Empfangssignale der vier Empfänger 61, 63, 65, 67 der ersten Gruppe gemäß Figur 2, welche deren Verstärker 13a zugeordnet sind und mit dem Multiplexer 9a im Multiplexbetrieb betrieben sind.

Mit T₁, T₂, T₃, T₄ sind Aktivierungszeitintervalle bezeichnet, in denen nacheinander die Empfänger 61, 63, 65, 67 aktiviert sind und der Empfangssignale im Verstärker 13a verstärkt werden.

Wie Figur 10 zeigt sind die Nutzsignale (bezeichnet mit I) von Umschaltstörungen II bedingt durch die Umschaltvorgänge des Multiplexers 9a überlagert. Um eine fehlerfreie Auswertung der Nutzsignale I in der Auswerteeinheit 8 durchzuführen, muss eine Einschwingzeit T abgewartet werden, bis die Umschaltstörungen II abgeklungen sind. Erst dann ist eine Auswertung der verstärkten Empfangssignale in der Auswerteeinheit 8 möglich, wodurch die Reaktionszeit bei der Generierung des Objektfeststellungssignals unerwünscht erhöht wird.

Diese Nachteile werden durch die erfindungsgemäße Empfänger-Gruppenanordnung 16a, 16b vermieden, wie Figur 11 zeigt.

Figur 11a zeigt ein Diagramm mit einer Aktivierung der Empfänger 61, 63, 65, 67 der ersten Gruppe in den Aktivierungszeitintervallen T₁, T₃, T₅, T₉. Erfindungsgemäß erfolgt die Aktivierung der Empfänger 62, 64, 66, 68 der zweiten Gruppe hierzu zeitversetzt mit dem Zeitversatz Δt, wobei diese Empfänger 62, 64, 66, 68 der zweiten Gruppe in den Aktivierungszeitintervallen T₂, T₄, T₆, T₈ aktiviert werden. In jedem Aktivierungszeitintervall T1... T8 sind wieder Umschaltstörungen II und Nutzsignale I vorhanden (analog zur Anordnung gemäß Figur 10).

Der Zeitversatz Δt zwischen der Aktivierung der beiden Gruppen der Empfänger 61 - 68 ist an das Aktivierungszeitintervall der einzelnen Empfänger 61 - 68 angepasst. Dabei ist der Zeitversatz Δt kleiner als der Aktivierungszeitintervall, wobei im vorliegenden Fall der Zeitversatz Δt zumindest näherungsweise der Einschwingzeit der Umschaltstörung II entspricht.

Dadurch werden bei der Zusammenführung der einzelnen Empfangssignale der Empfänger 61 - 68 zum Gesamt-Empfangsverlauf (Figur 1 1b), welcher der Steuerung 10 zugeführt wird, die Umschaltstörungen II ausgeblendet, so dass im Gesamt-Empfangsverlauf nur noch die Nutzsignale I vorhanden sind, wie Figur 11b zeigt.

Mit der erfindungsgemäßen Aufteilung der Empfänger 61 - 68 in Gruppen, die mit dem Zeitversatz Δt aktiviert werden, wird somit nicht nur eine verkürzte Reaktionszeit bei der Generierung des Objektfeststellungssignals erhalten, sondern es werden zudem die die Objektdetektion beeinträchtigenden Umschaltstörungen II eliminiert.

### Bezugszeichenliste

- (1): Lichtvorhang
- (2): Sendereinheit
- (3): Lichtstrahl
- (4): Sender
- (5): Empfängereinheit
- (6): Empfänger
- (7): Steuereinheit
- (8): Auswerteeinheit
- (9a, 9b): Multiplexer
- (10): Steuerung
- (11): Adressiereinheit
- (12): Steuersignal
- (13a, 13b): Verstärker
- (14a, 14b): Leitung
- (15): Umschalter
- (16a-d): Empfänger-Gruppe
- (17a-c): Signalverkettung
- (18): Busleitung
- (18a, 18b): Busleitung
- (19a, 19b): Leiterplatte
- (20): Schiebekette
- (21): Schieberegisterelement
- (22): Analogschalter
- (61 - 68): Empfänger
- (I): Nutzsignal
- (II): Umschaltstörung

- (Ti): Aktivierungsintervall

## Patentansprüche

1. Lichtvorhang (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6), und mit einer Auswerteeinheit (8), in welcher in Abhängigkeit von Empfangssignalen der Empfänger (6) ein Objektfeststellungssignal generiert wird, **dadurch gekennzeichnet, dass** die Empfänger (61 - 68) in Gruppen unterteilt sind, dass Steuermittel vorhanden sind, mittels derer die Empfänger (61 - 68) jeder Gruppe in einem Multiplexbetrieb einzeln nacheinander während Aktivierungszeitintervallen aktiviert werden, wobei die Aktivierung der Empfänger (61 - 68) unterschiedlicher Gruppen mit einem an ein Aktivierungszeitintervall angepassten Zeitversatz erfolgt.

2. Lichtvorhang (1) nach Anspruch 1, **dadurch gekennzeichnet, dass** einzelne Empfänger 61, 63, 65, 67 einer Gruppe wechselweise mit einem Empfänger 62, 64, 66, 68 einer anderen Gruppe nach einem Aktivierungszeitintervall zeitversetzt aktiviert werden.

3. Lichtvorhang (1) nach einem der Ansprüche 1 bis 2, **dadurch gekennzeichnet, dass** die Aktivierungszeitintervalle aller Empfänger (61 - 68) identisch sind.

4. Lichtvorhang (1) nach einem der Ansprüche 1 bis 3, **dadurch gekennzeichnet, dass** am Anfang jedes Aktivierungszeitintervalls eine durch Umschaltvorgänge des Multiplexbetriebs bedingte Umschaltstörung (II) in dem Empfangssignal vorhanden ist, welche nach einer Einschwingzeit abgeklungen ist, und dass der Zeitversatz an diese Einschwingzeit angepasst ist.

5. Lichtvorhang (1) nach Anspruch 4, **dadurch gekennzeichnet, dass** durch den an die Einschwingzeit angepassten Zeitversatz eine Ausblendung der Umschaltstörungen (II) im Empfangssignalverlauf der Empfänger (61 - 68) bewirkt ist.

6. Lichtvorhang (1) nach einem der Ansprüche 1 bis 5, **dadurch gekennzeichnet, dass** die Empfänger (61 - 68) eine Reihenanordnung bilden, wobei benachbarte Empfänger (61 - 68) unterschiedlichen Gruppen angehören.

7. Lichtvorhang (1) nach Anspruch 6, **dadurch gekennzeichnet, dass** zwei Gruppen von Empfängern (61 - 68) vorhanden sind, wobei geradzahlige Empfänger (62, 64, 66, 68) in der Reihenanordnung einer ersten Gruppe und ungeradzahlige Empfänger (63, 65, 67) in der Reihenanordnung einer zweiten Gruppe angehören.

8. Lichtvorhang (1) nach einem der Ansprüche 1 bis 7, **dadurch gekennzeichnet, dass** jeder Gruppe von Empfängern (61 - 68) ein Verstärker (13a, 13b) zugordnet ist, in welchem die Empfangssignale der Empfänger (61 - 68) dieser Gruppe verstärkt werden.

9. Lichtvorhang (1) nach einem der Ansprüche 1 bis 8, **dadurch gekennzeichnet, dass** die Steuermittel eine Steuerung (10) und eine Adressiereinheit (11), mittels derer eine Adressierung der Empfänger (61 - 68) durchgeführt wird, aufweisen.

10. Lichtvorhang (1) nach Anspruch 9, **dadurch gekennzeichnet, dass** die Adressiereinheit (11) eine Schiebekette (20) aufweist.

11. Lichtvorhang (1) nach einem der Ansprüche 1 bis 10, **dadurch gekennzeichnet, dass** zur Auswahl einer Gruppe von Empfängern (61 - 68) eine Gruppen-Schiebekette vorhanden ist.

12. Lichtvorhang (1) nach einem der Ansprüche 9 bis 11, **dadurch gekennzeichnet, dass** die Gruppen-Schiebekette Bestandteil der Schiebekette (20) ist.

13. Lichtvorhang (1) nach einem der Ansprüche 1 bis 12, **dadurch gekennzeichnet, dass** jeder Gruppe von Empfängern (61 - 68) ein Multiplexer (9a, 9b) zugeordnet ist.

14. Lichtvorhang (1) nach Anspruch 13, **dadurch gekennzeichnet, dass** Multiplexer (9a, 9b) aus digitalen Schaltelementen und/oder aus Analogschaltern (22) aufgebaut sind.

15. Lichtvorhang (1) nach einem der Ansprüche 13 oder 14, **dadurch gekennzeichnet, dass** Gruppen mit Komplett- oder Teilbestückungen vorhanden sind.

16. Lichtvorhang (1) nach einem der Ansprüche 1 bis 15, **dadurch gekennzeichnet, dass** die Gruppen von Empfängern (61 - 68) zu einem Gesamtsystem zusammengeschaltet sind.

17. Lichtvorhang (1) nach Anspruch 16, **dadurch gekennzeichnet, dass** ein Umschalter (15) vorhanden ist, mittels dessen eine Umschaltung von Ausgangssignalen der Gruppen der Empfänger (61 - 68) erfolgt.

18. Lichtvorhang (1) nach einem der Ansprüche 9 und 17, **dadurch gekennzeichnet, dass** der Ausgang des Umschalters (15) auf die Steuerung (10) geführt ist.

19. Lichtvorhang (1) nach einem der Ansprüche 1 bis 18 **dadurch gekennzeichnet, dass** eine oder mehrere Gruppen von Empfängern (61 - 68) auf einer Leiterplatte (19a, 19b) zusammengefasst sind und eine Kaskade bilden.

20. Lichtvorhang (1) nach einem der Ansprüche 1 bis 19, **dadurch gekennzeichnet, dass** die Empfangssignale in Form von Strom- oder Spannungssignalen vorliegen.

21. Lichtvorhang (1) nach Anspruch 20, **dadurch gekennzeichnet, dass** Empfangssignale in Form von Differenzsignalen vorliegen.

22. Lichtvorhang (1) nach einem der Ansprüche 1 bis 21, **dadurch gekennzeichnet, dass** dieser ein Sicherheitssensor ist.

23. Verfahren zum Betrieb eines Lichtvorhangs (1) zur Erfassung von Objekten in einem Überwachungsbereich, mit einer Anordnung von Lichtstrahlen (3) emittierenden Sendern (4), mit einer Anordnung von Lichtstrahlen (3) empfangenden Empfängern (6), und mit einer Auswerteeinheit (8), in welcher in Abhängigkeit von Empfangssignalen der Empfänger (6) ein Objektfeststellungssignal generiert wird, **dadurch gekennzeichnet, dass** die Empfänger (61 - 68) in Gruppen unterteilt sind, dass Steuermittel vorhanden sind, mittels derer die Empfänger (61 - 68) jeder Gruppe in einem Multiplexbetrieb einzeln nacheinander während Aktivierungszeitintervallen aktiviert werden, wobei die Aktivierung der Empfänger (61 - 68) unterschiedlicher Gruppen mit einem an ein Aktivierungszeitintervall angepassten Zeitversatz erfolgt.
